# EUROPÄISCHE PATENTSCHRIFT

(11) **EP 1 810 903 B1**
(45) Veröffentlichungstag und Bekanntmachung des Hinweises auf die Patenterteilung: **19.12.2012**
(21) Anmeldenummer: 07100026.9
(22) Anmeldetag: 02.01.2007
(51) Int. Cl.: B60T 8/36, F16K 31/06

(54) **Magnetventil**
Solenoid valve
Electrovanne

(30) Priorität: 24.01.2006 DE 102006003252
(43) Veröffentlichungstag der Anmeldung: 25.07.2007
(73) Patentinhaber: ROBERT BOSCH GMBH, 70442 Stuttgart (DE)
(72) Erfinder: Kratzer, Dietmar, 71732 Tamm (DE)

(56) Entgegenhaltungen:
- WO-A-2004/113139
- DE-A1- 10 342 156
- DE-A1-102004 030 423
- DE-A1-102004 030 425

## Beschreibung

### Stand der Technik

Die Erfindung geht aus von einem Magnetventil nach der Gattung des unabhängigen Patentanspruchs 1.

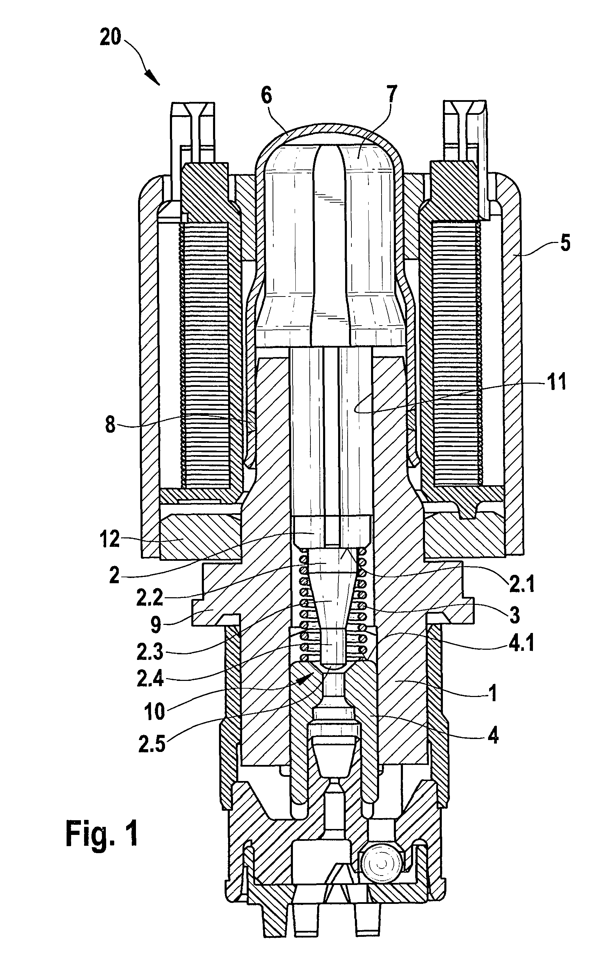

Ein herkömmliches Magnetventil, insbesondere für ein Hydraulikaggregat, welches beispielsweise in einem Antiblockiersystem (ABS) oder einem Antriebsschlupfregeisystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliche stromlos offene Magnetventil 20 neben einer Magnetbaugruppe 5 mit einer Abdeckscheibe 12 eine Ventilpatrone, welche eine Kapsel 6, einen Ventileinsatz 1, einen Stößel 2, eine Rückstellfeder 3 und einen Anker 7 umfasst. Bei der Herstellung des Magnetventils 20 werden die Kapsel 6 und der Ventileinsatz 1 der Ventilpatrone durch Pressen aufeinander gefügt und durch eine Dichtschweißung 8 wird die Ventilpatrone hydraulisch gegenüber der Atmosphäre abgedichtet. Zusätzlich nimmt der Ventileinsatz 1 die im hydraulischen System auftretenden Druckkräfte auf und leitet diese über einen Verstemmflansch 9 an einen nicht dargestellten Verstemmbereich auf einem Fluidblock weiter. Zudem nimmt der Ventileinsatz 1 den so genannten Ventilkörper 4 auf, welcher einen Ventilsitz 10 umfasst, in welchen der Stößel 2 dichtend eintaucht, um die Dichtfunktion des Magnetventils 20 umzusetzen. Der Stößel 2 umfasst eine axiale Anlagefläche 2.1, eine Federführung 2.2, auf welche die Rückstellfeder 3 aufgesteckt und im kurzen Bereich der Federführung 2.2 innen radial geführt wird, einen Stößelkonus 2.3, einen Übergangsbereich 2.4 und eine Stößelkalotte 2.5, welche dichtend in den Ventilsitz 10 eintaucht. Wie weiter aus Figur 1 ersichtlich ist, werden der Stößel 2 und die Rückstellfeder 3 im Ventileinsatz 1 geführt, wobei der Stößel 2 in einer Stößelführung 11 geführt wird und die Rückstellfeder 3 an einem Ende auf der Federführung 2.2 des Stößels 2 von innen radial geführt und zentriert ist und an der ersten Anlagefläche 2.1 des Stößels 2 anliegt, und am anderen Ende an einer zweiten Anlagefläche 4.1 axial geführt auf dem Ventilkörper 4 aufliegt. Eine weitere Fixierung bzw. Zentrierung der Rückstellfeder 3 an ihrem Einbauort ist nicht vorgesehen. Der Strömungsweg des Fluids durch das Magnetventil verläuft über die Rückstellfeder 3, so dass die Federkraft der Rückstellfeder 3 im Bereich der Strömungskräfte wirkt, welche aufgrund der Strömung auf die Windungen der Rückstellfeder 3 wirken können. Liegt nun die Größenordnung der Federkraft und die Größeordnung der Steifigkeit der Rückstellfeder 3 im Bereich der Kräfte der auf die Federwindungen wirkenden Strömung, so kann es zu einer unerwünschten Beeinflussung des Federverhaltens durch die Strömung kommen. So kann es beispielsweise zum Abheben der Rückstellfeder 3 von ihrer Auflagefläche 4.1 am Ventilkörper 4 kommen, was mit einer entsprechenden (Kraft-)Wirkung auf den Ventilstößel 2 und einer unerwünschter Beeinflussung der Ventilfunktion verbunden sein kann. Des Weiteren kann die ungeführte Rückstellfeder 3 seitlich ausgelenkt oder versetzt werden, so dass es zu Berührungen und damit zu Reibkräften zwischen dem Ventileinsatz 1 und dem Stößel 2 kommen kann. Durch die erzeugten Reibkräfte kann das Ventilverhalten negativ beeinflusst werden und der Stößel 2 kann durch die evtl. gratbehafteten Federenden beschädigt werden.

In der DE 10 2004 030 423 A1 wird eine Ventilvorrichtung für ein Magnetventil mit einem Ventileinsatz und einem über eine Stößelführung im Ventileinsatz beweglich geführten Stößel beschrieben, welcher sich über eine Rückstellfeder auf einem Ventilkörper abstützt. Hierbei wirkt die Rückstellfeder zwischen einer ersten Anlagefläche des Stößels und einer zweiten Anlagefläche am Ventilkörper, wobei an der zweiten Anlagefläche des Ventilkörpers Fixiermittel angeordnet sind, welche eine Lage der Rückstellfeder gegenüber dem Stößel und dem Ventilkörper definieren. Bei der beschriebenen Ventilvorrichtung sind die Fixiermittel einstückig mit dem Ventilkörper ausgeführt und an diesen angeformt.

In der DE 103 42 156 A1 wird ein Magnetventil beschrieben, welches einen Ventileinsatz und einen über eine Stößelführung im Ventileinsatz beweglich geführten Stößel umfasst, welcher sich über eine Rückstellfeder auf einem Ventilkörper abstützt. Hierbei wirkt die Rückstellfeder zwischen einer ersten Anlagefläche des Stößels und einer zweiten Anlagefläche am Ventilkörper. Am oberen Ende des Ventilkörpers ist ein rohrförmiges Hülsenteil zur gezielten Strömungsführung aufgesteckt. Durch einen frei auskragenden Abschnitt des Hülsenteils wird der Raum um ein bolzenförmiges Schließglied des Stößels eingegrenzt. Durch diese Raumverengung verläuft die Strömung innerhalb des Hülsenteils nach oben und außerhalb wieder zurück. Hierbei ist ein Ende der Rückstellfeder innerhalb des eingegrenzten Raums des Hülsenteils angeordnet und stützt sich auf dem Ventilkörper ab.

### Vorteile der Erfindung

Das erfindungsgemäße Magnetventil mit den Merkmalen des unabhängigen Patentanspruchs 1 hat demgegenüber den Vorteil, dass an einer Anlagefläche eines Ventilkörpers Fixiermittel angeordnet sind, welche eine Lage einer Rückstellfeder gegenüber einem Stößel und dem Ventilkörper definieren. Durch die radiale Führung und/oder Fixierung der Rückstellfeder am Ventilkörper kann in vorteilhafter Weise verhindert werden, dass Strömungskräfte, welche auf die Windungen der Rückstellfeder wirken, zu einem seitlichen Ausbrechen der Rückstellfeder führen können, oder die Rückstellfeder von einer Auflage abheben können bzw. die Windungen der Rückstellfeder relativ zueinander in Bewegung bzw. in Schwingungen versetzen können. Insbesondere wird durch die - Fixiermittel ein nur axial am Ventilkörper anliegendes Federende zentriert und stabilisiert, ohne die Montierbarkeit und Einstellbarkeit des Magnetventils negativ zu beeinflussen. Zudem können in vorteilhafter Weise eventuell vorhandene Freiheitsgrade der Federposition und der Federlage festgelegt werden und somit zusammenhängende statische und dynamische Effekte, wie z.B. Schwingen, radiale Auslenkungen usw., und deren Auswirkungen auf umliegende Bauteile positiv beeinflusst werden. So kann insbesondere der Verschleiß des Stößels reduziert werden, welcher entsteht, wenn sich die vergleichsweise harte Rückstellfeder, welche z.B. aus Stahl gefertigt ist, relativ zum weichen Stößel rotatorisch bewegt, welcher z.B. aus Kunststoff gefertigt ist. Zusätzlich ermöglicht die definierte Lage der Rückstellfeder, dass das Regel-/Steuerverhalten des erfindungsgemäßen Magnetventils genauer vorher bestimmt werden kann und Abweichungen innerhalb des Ventils reduziert werden können, welche sich bei verschiedenen Arbeitszyklen des Ventils ergeben können. Zudem können in vorteilhafter Weise die Abweichungen zwischen mehreren Ventilen vom gleichen Typ reduziert werden.

Die Fixiermittel sind über Befestigungsmittel kraftschlüssig und/oder formschlüssig mit dem Ventilkörpers verbunden, so dass ein durch Strömungskräfte verursachtes Abheben der Fixiermittel verhindert werden kann. Die Fixiermittel weisen erfindungsgemäß eine Grundscheibe mit einem hoch stehenden Bund auf, in welchem ein an der zweiten Anlagefläche des Ventilkörpers anliegendes Ende der Rückstellfeder geführt und/oder fixiert ist. Die Grundscheibe der Fixiermittel ist über die Befestigungsmittel mit dem Ventilkörper kraftschlüssig und/oder formschlüssig verbunden, wobei die Befestigungsmittel mindestens eine Rastnase und mindestens eine Rastvertiefung umfassen.

Durch die in den abhängigen Ansprüchen aufgeführten Maßnahmen und Weiterbildungen sind vorteilhafte Verbesserungen des im unabhängigen Patentanspruch angegebenen Magnetventils möglich.

Die mindestens eine Rastnase und die mindestens eine Rastvertiefung sind beispielsweise als Clipsverbindung und/oder als Schnappverbindung ausgeführt, wodurch die Befestigung der Fixiermittel am Ventilkörper in vorteilhafter Weise verbessert wird. Die Fixiermittel sind beispielsweise als Kunststoffspritzteil ausgeführt, wodurch eine kostengünstige Herstellung ermöglicht wird.

Vorteilhafte, nachfolgend beschriebene Ausführungsformen der Erfindung sowie das zu deren besserem Verständnis oben erläuterte, herkömmliche Ausführungsbeispiel sind in den Zeichnungen dargestellt. Es zeigen:
Figur 1 eine schematische Schnittdarstellung eines herkömmlichen Magnetventils,
Figur 2 eine schematische Schnittdarstellung eines erfindungsgemäßen Ventilkörpers für das Magnetventil gemäß Figur 1, und
Figur 3 eine schematische Schnittdarstellung eines Details D aus Figur 2.

### Beschreibung

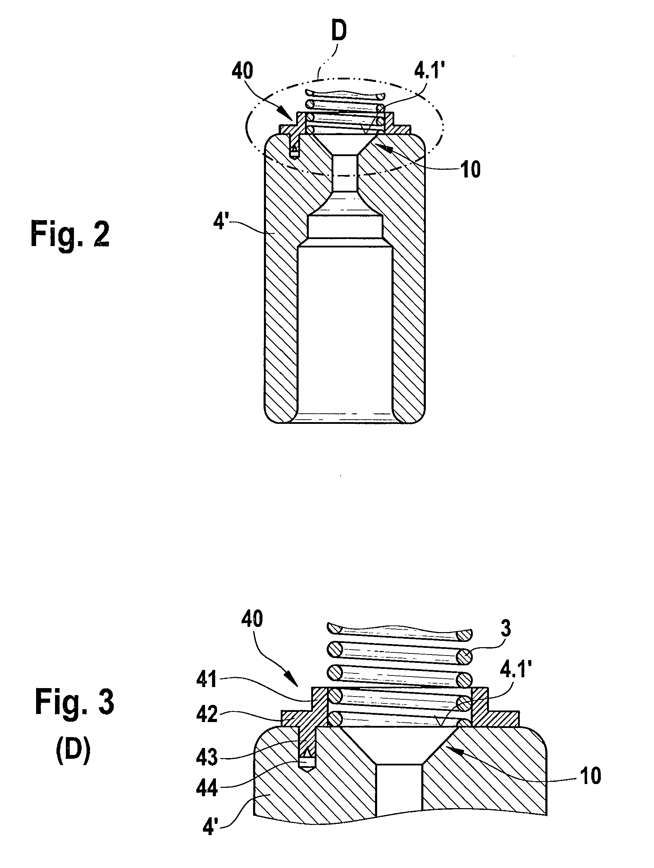

Figur 2 und 3 zeigen einen erfindungsgemäßen Ventilköper 4', welcher den herkömmlichen Ventilkörper 4 in einem Magnetventil 20 gemäß Figur 1 ersetzt. Wie aus Figur 2 und 3 ersichtlich ist, umfasst der erfindungsgemäße Ventilkörper 4' für das Magnetventil 20 Fixiermittel 40, welche zur Führung und/oder Fixierung einer Rückstellfeder 3 auf einer Anlagefläche 4.1' des

Ventilkörpers 4' angeordnet sind. Die Rückstellfeder 3 ist auf einen über eine Stößelführung 11 in einem Ventileinsatz 1 des Magnetventils 20 beweglich geführten Stößel 2 aufgesteckt und liegt mit einem Ende an einer ersten Anlagefläche 2.1 des Stößels 2 an. Die Rückstellfeder 3 wird an diesem Ende im kurzen Bereich einer Federführung 2.2 des Stößels 2 von innen radial geführt und zentriert. Am anderen Ende wird die Rückstellfeder 3 durch die Fixiermittel 40 an der zweiten Anlagefläche 4.1' des Ventilkörpers 4' zentriert und geführt, so dass die Lage der Rückstellfeder 3 gegenüber dem Stößel 2 und dem Ventilkörper 4' definierbar ist.

Wie aus Figur 3 ersichtlich ist, umfassen die Fixiermittel 40 eine Grundscheibe 42 mit einem hoch stehenden Bund 41, in welchem das an der zweiten Anlagefläche 4.1' des Ventilkörpers 4' anliegende Ende der Rückstellfeder 3 geführt und/oder fixiert ist. Durch die radiale Führung und/oder Fixierung der Rückstellfeder 3 am Ventilkörper 4' können in vorteilhafter Weise eventuell vorhandene Freiheitsgrade der Federposition und der Federlage festgelegt werden und somit zusammenhängende statische und dynamische Effekte, wie z.B. Schwingen, radiale Auslenkungen usw., und deren Auswirkungen auf umliegende Bauteile positiv beeinflusst werden. Die Fixiermittel 40 sind beispielsweise als Kunststoffspritzteil ausgeführt und über Befestigungsmittel 43, 44 kraftschlüssig und/oder formschlüssig mit dem Ventilkörper 4' verbunden. Im dargestellten Ausführungsbeispiel ist die Grundscheibe 42 der Fixiermittel 40 über die Befestigungsmittel, welche eine an der Grundscheibe 42 angeordnete Rastnase 43 und eine in den Ventilkörper 4 eingebrachte Rastvertiefung 44 umfassen, mit dem Ventilkörper 4' kraftschlüssig und/oder formschlüssig verbunden. Zudem sind die Rastnase 43 und die Rastvertiefung 44 als Clipsverbindung und/oder als Schnappverbindung ausgeführt.

## Patentansprüche

1. Magnetventil mit einem Ventileinsatz (1) und einem über eine Stößelführung (11) im Ventileinsatz (1) beweglich geführten Stößel (2), welcher sich über eine Rückstellfeder (3) auf einem Ventilkörper (4, 4') abstützt, wobei die Rückstellfeder (3) zwischen einer ersten Anlagefläche (2.1) des Stößels (2) und einer zweiten Anlagefläche (4.1, 4.1') am Ventilkörper (4, 4') wirkt, wobei an der zweiten Anlagefläche (4.1') des Ventilkörpers (4') Fixiermittel (40) angeordnet sind, welche eine Lage der Rückstellfeder (3) gegenüber dem Stößel (2) und dem Ventilkörper (4') definieren, und wobei die Fixiermittel (40) über Befestigungsmittel (43, 44) mit dem Ventilkörper (4') verbunden sind, **dadurch gekennzeichnet, dass** die Fixiermittel (40) eine Grundscheibe (42) mit einem hoch stehenden Bund (41) aufweisen, in welchem ein an der zweiten Anlagefläche (4.1') des Ventilkörpers (4') anliegendes Ende der Rückstellfeder (3) geführt und/oder fixiert ist, wobei die Grundscheibe (42) der Fixiermittel (40) über die Befestigungsmittel (43, 44) mit dem Ventilkörper (4') kraftschlüssig und/oder formschlüssig verbunden ist, und wobei die Befestigungsmittel mindestens eine Rastnase (43) und mindestens eine Rastvertiefung (44) umfassen.

2. Magnetventil nach Anspruch 1, **dadurch gekennzeichnet, dass** die mindestens eine Rastnase (43) und die mindestens eine Rastvertiefung (44) als Clipsverbindung und/oder als Schnappverbindung ausgeführt sind.

3. Magnetventil nach Anspruch 1 oder 2, **dadurch gekennzeichnet, dass** die Fixiermittel (40) als Kunststoffspritzteil ausgeführt sind.

## Claims

1. Solenoid valve having a valve insert (1) and a plunger (2), which is guided in a movable manner in the valve insert (1) via a plunger guide (11) and is supported on a valve body (4, 4') via a restoring spring (3), wherein the restoring spring (3) acts between a first abutment surface (2.1) of the plunger (2) and a second abutment surface (4.1, 4.1') on the valve body (4, 4'), wherein the second abutment surface (4.1') of the valve body (4') has arranged on it fixing means (40) which define a position of the restoring spring (3) in relation to the plunger (2) and the valve body (4'), and wherein the fixing means (40) are connected to the valve body (4') via fastening means (43, 44), **characterized in that** the fixing means (40) have a basic disc (42) with an upright collar (41), in which is guided and/or fixed an end of the restoring spring (3) which butts against the second abutment surface (4.1') of the valve body (4'), wherein the basic disc (42) of the fixing means (40) is connected to the valve body (4') in a force-fitting and/or form-fitting manner by the fastening means (43, 44), and wherein the fastening means comprise at least one latching nose (43) and at least one latching depression (44).

2. Solenoid valve according to Claim 1, **characterized in that** the at least one latching nose (43) and the at least one latching depression (44) are configured as a clip connection and/or as a snap-fit connection.

3. Solenoid valve according to Claim 1 or 2, **characterized in that** the fixing means (40) are configured as a plastics injection moulding.

## Revendications

1. Électrovanne comprenant un insert de soupape (1) et un poussoir (2) guidé de manière mobile dans l'insert de soupape (1) au moyen d'un guide de poussoir (11), lequel poussoir s'appuie, par l'intermédiaire d'un ressort de rappel (3), sur un corps de soupape (4, 4') , le ressort de rappel (3) agissant entre une première surface d'appui (2.1) du poussoir (2) et une deuxième surface d'appui (4.1, 4.1') sur le corps de soupape (4, 4'), des moyens de localisation (40) étant disposés sur la deuxième surface d'appui (4.1') du corps de soupape (4'), lesquels définissent une position du ressort de rappel (3) par rapport au poussoir (2) et au corps de soupape (4') et les moyens de localisation (40) étant reliés au corps de soupape (4') grâce à des moyens de fixation (43, 44), **caractérisée en ce que** les moyens de localisation (40) comprennent une plaque de base (42) dotée d'un rebord surélevé (41) dans lequel est guidée et/ou fixée une extrémité du ressort de rappel (3) qui s'applique contre la deuxième surface d'appui (4.1') du corps de soupape (4'), la plaque de base (42) des moyens de localisation (40) étant reliée au corps de soupape (4') par force et/ou par complémentarité de formes grâce aux moyens de fixation (43, 44) et les moyens de fixation comportant au moins un ergot d'encliquetage (43) et au moins un évidement d'encliquetage (44).

2. Électrovanne selon la revendication 1, **caractérisée en ce que** l'au moins un ergot d'encliquetage (43) et l'au moins un évidement d'encliquetage (44) sont réalisés sous forme de liaison par enclipsage et/ou sous forme de liaison par encliquetage.

3. Électrovanne selon la revendication 1 ou 2, **caractérisée en ce que** les moyens de localisation (40) sont réalisés sous forme de pièce moulée par injection de plastique.
